# EUROPEAN PATENT APPLICATION

(11) **EP 3 726 397 A1**
(43) Date of publication of application: **21.10.2020**
(21) Application number: 18887800.3
(22) Date of filing: 12.12.2018
(51) Int. Cl.: G06F 16/2453

(54) **JOIN QUERY METHOD AND SYSTEM FOR MULTIPLE TIME SEQUENCES UNDER COLUMNAR STORAGE**

(30) Priority: 12.12.2017 CN 201711322631
(71) Applicant: Tsinghua University, Beijing 100084 (CN)
(72) Inventor: WANG, Jianmin, Beijing 100084 (CN); HUANG, Xiangdong, Beijing 100084 (CN); QIAO, Jialin, Beijing 100084 (CN); WANG, Chen, Beijing 100084 (CN); LONG, Mingsheng, Beijing 100084 (CN)
(74) Representative: Kutzenberger Wolff & Partner
(86) International application number: PCT/CN2018/120603
(87) International publication number: WO 2019/114754

(57) **Abstract**

A join query method of multiple time series in columnar storage is provided comprising dividing multiple time series in columnar storage into a plurality of projected time series and a plurality of selected time series, each of the time series including a timestamp column and a value column (step S1); screening, from a timestamp column of each selected time series, timestamps that satisfy a preset filter condition of each selected time series (step S2); and traversing projected time series based on the timestamps that satisfy the preset filter condition of each selected time series, and acquiring join query results, wherein the join query results are timestamps of the projected time series and data values corresponding to the timestamps of the projected time series (step S3). The join query method and system of multiple time series in columnar storage provided in the present disclosure can effectively filter and query based on the characteristics of time series data by calculating timestamps that satisfy all the conditions for filter conditions of all columns, and then querying the projected time series by using the timestamp.

## Description

### CROSS-REFERENCE TO RELATED APPLICATION

This application claims priority to Chinese patent application No. 2017113226315 filed on December 12, 2017, entitled "Join Query Method and System of Multiple Time Series in Columnar Storage", which is incorporated herein by reference in its entirety.

### BACKGROUND

### Technical Field

The present disclosure belongs to the field of computer data management technologies, and more specifically, to a join query method and system of multiple time series in columnar storage.

### Description of the Related Art

With the continuous development and maturity of modern technologies such as cloud computing, the Internet, the Internet of Things and etc., people are paying more and more attention to data. The data comes from all aspects of our life, including enterprises' production transaction data, human-to-human interaction data in the Internet, monitoring data sent back by sensors in the Internet of Things, etc., in which time series data take up a large proportion. The time series data, abbreviated as time series, refers to the data collected by sensors at different time points. The data can include a timestamp field, as well as an unique ID of the sensor and values at the timestamp, such as ambient temperatures, stock price, a memory usage rate of a machine, etc. over a period of time. This type of data reflects the changing states of a certain thing, phenomenon, etc. over time.

For the characteristics above, columnar storage is often used for the time series data. That is, the timestamp column and the value column are separately stored. Since the data at the same column have consistent types, efficient compression and encoding methods can be adopted for the data in columnar storage, thereby greatly reducing the space occupied by the storage of the data.

However, although columnar storage reduces the storage occupation of data, the query efficiency of query is reduced, because data needs to be joined by timestamp in query. Therefore, there is a need for a join query method and system of multiple time series in columnar storage.

### BRIEF SUMMARY

The present disclosure provides a join query method of multiple time series in columnar storage that overcomes the above problems or at least partially solves the above problems, the method includes:
step S1: dividing multiple time series in columnar storage into a plurality of projected time series and a plurality of selected time series, each of the time series including a timestamp column and a value column;
step S2: screening, from a timestamp column of each selected time series, timestamps that satisfy a preset filter condition of each selected time series; and
step S3: traversing the projected time series based on the timestamps that satisfy the preset filter condition of each selected time series, and acquiring join query results, wherein the join query results are timestamps of the projected time series and data values corresponding to the timestamps of the projected time series.

Step S2 includes:
S21, acquiring a filter condition corresponding to each selected time series, the filter condition including a timestamp predicate and a data value predicate; and
S22, for each selected time series, storing timestamps that satisfy the timestamp predicate and whose corresponding data values simultaneously satisfy the data value predicate in the timestamp column of the selected time series.

Step S22 includes:
simultaneously reading timestamps in the timestamp column of each selected time series and the data values of the value column of each selected time series in a batch manner. Batch read a preset number of timestamps and data values each time until all the timestamps in the timestamp column and all the data values of the value column are read; and
storing timestamps that satisfy the filter condition of each selected time series, respectively based on the read results.

Step S3 includes:
S31, screening a first timestamp existing in all the selected time series in the timestamps that satisfy the filter condition of each selected time series;
S32, traversing the projected time series, acquiring a second timestamp that is the same as the first timestamp in the timestamp columns of the projected time series; and
S33, using the second timestamp and a data value corresponding to the second timestamp as the join query results.

Step S31 includes:
selecting one target timestamp from timestamps that satisfy the filter condition of each selected time series and storing the target timestamp in a preset storage queue; and
traversing timestamps that satisfy the filter condition of remaining s selected time series based on the target timestamp corresponding to each selected time series, and using the target timestamp as the first timestamp when the target timestamp is included in all the timestamps that satisfy the filter condition of the remaining selected time series.

Step S31 further includes:
traversing timestamps that satisfy the filter condition of the remaining selected time series based on the target timestamp corresponding to each selected time series, and deleting the target timestamp from the storage queue when the target timestamp is not included in all the timestamps that satisfy the filter condition of the remaining any selected time series.

The storage queue is a priority queue.

According to a second aspect of the present disclosure, a join query system of multiple time series in columnar storage is provided comprising:
a time series division module configured to divide multiple time series in columnar storage into a plurality of projected time series and a plurality of selected time series, each of the time series including a timestamp column and a value column;
a timestamp filtration module configured to screen, from a timestamp column of each selected time series, timestamps that satisfy a preset filter condition of each selected time series; and
a join query module configured to traverse the projected time series based on the timestamps that satisfy the preset filter condition of each selected time series, and acquire a join query results, wherein the join query results are timestamps of the projected time series and data values corresponding to the timestamps of the projected time series.

According to a third aspect of the present disclosure, a computer program product is provided including a computer program stored on a non-transitory computer readable storage medium, the computer program including program instructions enabling a computer to perform the methods above when the program instructions are executed by the computer.

According to a fourth aspect of the present disclosure, a non-transitory computer readable storage medium for storing a computer program as described above is provided.

The join query method and system of multiple time series in columnar storage provided in the present disclosure can effectively filter and query based on the characteristics of time series data by calculating timestamps that satisfy all the conditions for filter conditions of all columns, and then querying projected time series by using the timestamps.

### BRIEF DESCRIPTION OF THE DRAWINGS

Fig. 1 is a flowchart of a join query method of multiple time series in columnar storage according to an embodiment of the present disclosure;
Fig. 2 is a schematic diagram of an example of a join query of multiple time series in columnar storage according to an embodiment of the present disclosure; and
Fig. 3 is a structural diagram of a join query system of multiple time series in columnar storage according to an embodiment of the present disclosure.

### DETAILED DESCRIPTION

The specific implementations of the present disclosure are further described in detail below with reference to the drawings and embodiments. The following embodiments are intended to illustrate the disclosure, but are not intended to limit the scope of the disclosure.

In the prior art, a columnar storage manner has been mostly adopted for the time series data, and the columnar storage means that the timestamp column and the value column are separately stored. Since the data at the same column have consistent types, an efficient data compression coding method can be adopted for the data in columnar storage, thereby greatly reducing the space occupied by the storage of the data.

However, the columnar storage leads to a new problem, that is, how to efficiently perform timestamp-based join queries on multiple time series while greatly reducing the storage amount of data. There is no join query method capable of completing the join query function efficiently and quickly in the existing technical means.

In view of the problems above in the prior art, the embodiments of the present disclosure provide a join query method and system of multiple time series in columnar storage which can effectively filter and query based on the characteristics of time series data by calculating timestamps that satisfy all the conditions for filter conditions of all columns, and then querying the projected time series by using the timestamp.

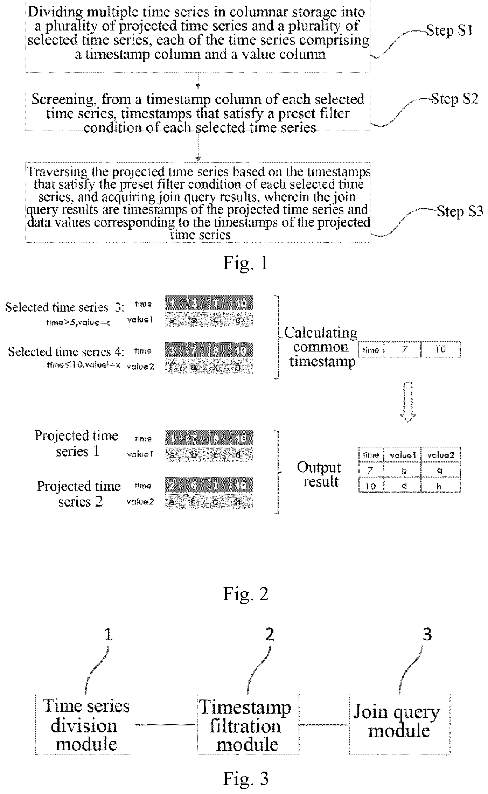

Fig. 1 is a flowchart of a join query method of multiple time series in columnar storage according to an embodiment of the present disclosure. As shown in Fig. 1, the method includes:
step S1: dividing multiple time series in columnar storage into a plurality of projected time series and a plurality of selected time series, each of the time series including a timestamp column and a value column;
step S2: screening, from a timestamp column of each selected time series, timestamps that satisfy a preset filter condition of each selected time series; and
step S3: traversing the projected time series based on the timestamps that satisfy the preset filter condition of each selected time series, and acquiring join query results, wherein the join query results are timestamps of the projected time series and data values corresponding to the timestamps of the projected time series.

Specifically, the timestamp column and the value column of each time series in the multiple time series in columnar storage in step S1 are separately stored, the timestamps stored in the time series are strictly increasing timestamps, all time series currently stored are defined by a total of N_0 columns, each column contains respective timestamp column and value column, the projected time series are defined to have a total of N_1 columns of data, the N_1 columns are *Q*₁, *Q*₂···*Qᵢ*···*Q*_{*N_*1-1}, *Q_{N}*, wherein *Qᵢ* represents the query for the ith column, and divided N_2 columns of selected time series are defined therein.

In step S2, the preset filter condition may be the same or different for each selected time series, and the filter condition is defined to be *F*₁, *F*₂···*Fᵢ*···*F*_{*N_*2*-*1}, *F*_{*N_*2}, wherein *Fᵢ* represents the filter condition for the data stored in ith column, timestamps that satisfy the preset filter condition can be screened out from the timestamp columns of each selected time series based on the filter condition.

In step S3, the filtering and query can be effectively performed according to the characteristics of the time series data by querying a projected time series through the timestamps that satisfy the preset filter condition.

Based on the embodiment above, step S2 includes:
S21, acquiring a filter condition corresponding to each selected time series, the filter condition including a timestamp predicate and a data value predicate; and
S22, for each selected time series, storing timestamps that satisfy the timestamp predicate and whose corresponding data values simultaneously satisfy the data value predicate in the timestamp column of the selected time series.

In S21, the selected time series correspondingly includes a filter condition, wherein the filter condition is a predicate of the timestamps and a predicate of the data values, for example, when the filter condition is "time>5, value=c", the timestamps predicate is "time is greater than 5" and the data values predicate is "value is equal to c".

In S22, the operation of the embodiment of the present disclosure is substantially performed on each selected time series and data reading is performed simultaneously on the timestamp columns and the value columns of each selected time series. It is determined that the filtration is successful when the timestamps in the timestamp columns of the selected time series satisfy the timestamp predicate and the data values of the value columns of the selected time series satisfy the data value predicate, and the timestamps corresponding to the successfully filtered data are retained.

Based on the embodiments above, step S22 specifically includes:
simultaneously reading in batches timestamps in the timestamp column of each selected time series and the data values of the value column of each selected time series. Batch read a preset number of timestamps and data values each time until all the timestamps in the timestamp column and all the data values of the value column are read; and
storing timestamps that satisfy the filter condition of each selected time series, respectively based on the read results.

It can be understood that, since the amount of data storable in the memory is limited, the embodiment of the present disclosure adopts reading data in batches, and defines that the upper limit of the number of data to be read in batches for each column is *T,* and thus the amount of data read each time is *T* when each selected time series begins to be read until all data in the selected time series are read.

Timestamps that satisfy the filter condition of each selected time series are stored respectively during the reading process.

Based on the embodiments above, step S3 includes:
S31, screening a first timestamp common to all the selected time series in the timestamps that satisfy the filter condition of each selected time series;
S32, traversing the projected time series, acquiring a second timestamp that is the same as the first timestamp in the timestamp columns of the projected time series; and
S33, using the second timestamp and a data value corresponding to the second timestamp as the join query results.

In step S31, it can be understood that, a timestamp set that satisfies the filter condition of each selected time series is included corresponding to each selected time series, while in the embodiment of the present disclosure, it is necessary to screen out a common timestamp, i.e., the first timestamp described in the embodiment from all selected time series.

In step S32, the projected time series can be traversed using the first timestamp to acquire the same timestamp in the projected time series, thereby outputting query results in step S33.

Based on the embodiment above, step S31 includes:
selecting one target timestamp from timestamps that satisfy the filter condition of each selected time series and storing the target timestamp in a preset storage queue; and
traversing timestamps that satisfy the filter condition of remaining selected time series based on the target timestamp corresponding to each selected time series, and using the target timestamp as the first timestamp when the target timestamp is included in all the timestamps that satisfy the filter condition of the remaining selected time series.

Step S31 further includes:
traversing timestamps that satisfy the filter condition of the remaining selected time series based on the target timestamp corresponding to each selected time series, and deleting the target timestamp from the storage queue when the target timestamp is not included in all the timestamps that satisfy the filter condition of the remaining any selected time series.

It can be understood that, when screening the common first timestamp, the embodiment of the present disclosure adopts a sequential query method of the storage queues, that is, selecting one timestamp from the timestamps that satisfy the filter condition of the selected time series, storing one timestamp in the storage queue, traversing the timestamp in the timestamps that satisfy the filter condition of the remaining selected time series, determining whether the timestamp is included in all the selected time series, storing the target timestamp as the first timestamp in a preset list QLIST when the timestamp is included, wherein the list QLIST stores projected timestamps calculated according to the filter condition.

The target timestamp is deleted from the storage queue when the target timestamp is not included until the foregoing process is completed for all the timestamps that satisfy the filter condition of the selected time series.

Based on the embodiments above, the storage queue is a priority queue.

It can be understood that the priority queue can be used to prioritize a plurality of timestamps in the storage queue, so that the timestamps having higher priorities are preferentially processed, thereby improving the traversal efficiency.

In general, the priorities of the timestamps are defined in a small-to-large manner.

Fig. 2 is a schematic diagram of an example of a join query of multiple time series in columnar storage according to an embodiment of the present disclosure. As shown in Fig. 2, the embodiment of the present disclosure provides a projected time series 1 and a projected time series 2, and a filtering column 3 and a filtering column 4. The embodiment of the present disclosure performs a join query flow for multiple time series in columnar storage as follows according to Fig. 2.

As shown in Fig. 2, the filter condition of column 3 is "time>5, value=c", and the filter condition of column 4 is "time ≤ 10, value !=x", that is, for the data of column 3 satisfying the filter condition, the timestamp thereof is greater than 5 and the value is equal to *c*; for the data of column 4 satisfying the filter condition, a timestamp thereof is less than or equal to 10 and the value thereof cannot be equal to *x.*

Specifically, the steps are as follows.
(1) F_INDEX=0 is recorded, a list *Array*₁,*Array*₂···*Array*_{*N_*2} and the capacity statistics *Size*₁, *Size*₂···*Size*_{*N_*2} of respective list are initialized, wherein *Arrayᵢ* represents the time series table of the timestamps that satisfy the filter condition *Fᵢ* in the *i*th column data, *Sizeᵢ* indicates the amount of data stored in *Arrayᵢ* ; *L_Array*₁,*L_Array*₂*··L_Array*_{*N_*2} respectively represent the sizes of *Array*₁, *Array*₂···*Array*_{*N_*2}. As shown in Fig. 2, *Array*₁ and *Array*₂ may store timestamps that satisfy the filter condition of the columns 3 and 4, that is, {7, 10} and {3, 7, 10}, respectively.
(2) When F_INDEX>N_2, the priority queue is directly used to store a timestamp variable, and proceeding to (4);
When *Size_{F_INDEX}* ≥*T*, wherein *T* is the number of data read per batch, or all the data in F_INDEX column has been read, then *F*_*INDEX* = *F*_*INDEX*+1.
Otherwise, a next data that is not read in F_INDEX column is read, the timestamp of the data is added into *Array_{F_INDEX}* and *Size_{F_INDEX}* = *Size_{F_INDEX}* +1 when both the timestamp and value of the data satisfy the filter condition *F_{F_INDEX}*.
(3) *F_INDEX* = *F_INDEX*+1, the process is proceeded to (2) and repeatedly performed.
(4) In an embodiment of the present disclosure, a timestamp variable is stored using a priority queue PQ in which the smaller the timestamp, the higher the priority; it is assumed that *Array_I*₁···*Array_I*_{*N_*2} respectively represent the number of data that have been read in *Array*₁, *Array*₂···*Array*_{*N_*2}, and the values of *Array*_*I*₁···*Array*_*I*_{*N*_2} at initialization are 0.
(5) *Array*₁, *Array*₂···*Array*_{*N_*2} in turn is traversed, a first piece of data is added into PQ, and *Array*_*Iᵢ* = *Array_Iᵢ*+1 when *Arrayᵢ* is traversed. As shown in Fig. 2, the first timestamps of *Array*₁ and *Array*₂ are {7}, {3}, respectively.
(6) t_0=-1 is initialized.
(7) When the PQ is not empty, the first data t_1 of PQ is taken out, whereint_1 is a timestamp; otherwise, the projected time series is directly queried according to QLIST provided in the present disclosure. When none of *Array*₁, *Array*₂···*Array*_{*N_*2} contains t_1, the process above is repeated. When t_0=-1, t_1 is added to the list QLIST, t_0=t_1; otherwise, when t_1 is not equal to t_0, t_1 is added to the list QLIST, t_0=t_1. As shown in Fig. 2, firstly for timestamp 3, since only column 4 contains a data point equal to the timestamp, column 3 does not contain the data point equal to the timestamp, timestamp 3 will be discarded; for timestamp 7, both column 3 and column 4 contain a point equal to the timestamp, therefore this point is the common timestamp of the filtering column.
(8) *j*=1 is initialized.
(9) Each piece of data of *Arrayⱼ* is traversed in turn, when j>N_2, the process returns to (7), when *Array_Iⱼ > L_Arrayⱼ*, *j* = *j* + 1, (9) is performed; when the *Array_Iⱼ* item of *Arrayⱼ* is equal to t_1, then *Array_Iⱼ* = *Array_Iⱼ* + 1, (9) is performed, when the *Array_Iⱼ* item of *Arrayⱼ* is equal to t_1, then *Array_Iⱼ* = *Array_Iⱼ* + 1, (9) is performed; When the *Array_Iⱼ* item of *Arrayⱼ* is not equal to t_1, the *Array_Iⱼ* item of *Arrayⱼ* item is added into PQ, *Array_Iⱼ > L_Arrayⱼ* , and *j* = *j* + 1, (9) is performed.
(10) Projected time series *Q*₁,*Q*₂···*Qᵢ*···*Q*_{*N_*1-1},*Q_{N}* are queried and output according to the timestamps in the QLIST, and the timestamps of the data in the projected time series is output only when they are present in the QLIST. The process is proceeded to (2) when the data not to be read is present in the filtration column, otherwise the query process ends. As shown Fig. 1, the common timestamp calculated by filtration column is {7, 10}, and projected time series are column 1 and column 2. Through the query of column 1 and column 2, the final output results are shown in Table 1:

**Table 1 Results of join query**

| Time | Value 1 | Value2 |
|---|---|---|
| 7 | *b* | *g* |
| 10 | *d* | *h* |

As can be seen from the output results of the query, the embodiments of the present disclosure can effectively filter and query based on the characteristics of time series data by calculating common timestamps that satisfy all the conditions for filter conditions of all columns, and then querying projected time series by using the timestamps.

A multi-line batch merging algorithm is adopted in the query process, the memory usage is small each time through batch reading, and a part of reading results at each time is merged into final results by iterating the batch reading algorithm for multiple times.

Fig. 3 is a structural diagram of a join query system of multiple time series in columnar storage according to an embodiment of the present disclosure. As shown in Fig. 3, the join query system of multiple time series in columnar storage includes a window division module 1, a feature value calculation module 2, a feature distance comparison module 3, and the compression storage module 4 in which
a time series division module 1 is configured to divide multiple time series in columnar storage into a plurality of projected time series and a plurality of selected time series, each of the time series including a timestamp column and a value column;
a timestamp filtration module 2 is configured to screen, from a timestamp column of each selected time series, timestamps that satisfy a preset filter condition of each selected time series; and
a join query module 3 is configured to traverse the projected time series based on the timestamps that satisfy the preset filter condition of each selected time series, and acquire a join query results, wherein the join query results are timestamps of the projected time series and data values corresponding to the timestamps of the projected time series.

Specifically, how to use the time series division module 1, the timestamp filtration module 2, and the join query module 3 to perform the join query method of multiple time series in columnar storage may be referred to the embodiments above, and the details are not described herein again.

The embodiment of the present disclosure provides a join query system of multiple time series in columnar storage, including at least one processor and at least one memory in communication with the processor;
wherein the memory stores program instructions executable by the processor, the processor calls the program instructions to perform the methods provided by the method embodiments above, for example, including: step S1: dividing multiple time series in columnar storage into a plurality of projected time series and a plurality of selected time series, each of the time series including a timestamp column and a value column; step S2: screening, from a timestamp column of each selected time series, timestamps that satisfy a preset filter condition of each selected time series; and step S3: traversing the projected time series based on the timestamps that satisfy the preset filter condition of each selected time series, and acquiring join query results, wherein the join query results are timestamps of the projected time series and data values corresponding to the timestamps of the projected time series.

The embodiment discloses a computer program product including a computer program stored on a non-transitory computer readable storage medium, the computer program includes program instructions, when the program instructions are executed by a computer, the computer can perform the methods provided by the method embodiments above, for example, including: step S1: dividing multiple time series in columnar storage into a plurality of projected time series and a plurality of selected time series, each of the time series including a timestamp column and a value column; step S2: screening, from a timestamp column of each selected time series, timestamps that satisfy a preset filter condition of each selected time series; and step S3: traversing the projected time series based on the timestamps that satisfy the preset filter condition of each selected time series, and acquiring join query results, wherein the join query results are timestamps of the projected time series and data values corresponding to the timestamps of the projected time series.

The embodiment discloses a non-transitory computer readable storage medium storing computer instructions which enables a computer to perform the methods provided by the method embodiments above, for example, including: step S1: dividing multiple time series in columnar storage into a plurality of projected time series and a plurality of selected time series, each of the time series including a timestamp column and a value column; step S2: screening, from a timestamp column of each selected time series, a timestamps that satisfy a preset filter condition of each selected time series; and step S3: traversing the projected time series based on the timestamps that satisfy the preset filter condition of each selected time series, and acquiring join query results, wherein the join query results are timestamps of the projected time series and data values corresponding to the timestamps of the projected time series.

It can be understood by a person of ordinary skill in the art that all or part of the steps of implementing the method embodiments above may be completed by using hardware related to the program instructions. The foregoing program may be stored in a computer readable storage medium, and steps including those of the method embodiments above are performed when the program is executed. The foregoing storage medium includes various mediums that can store program codes, such as a ROM, a RAM, a magnetic disk, an optical disk and etc.

Through the description of the embodiments above, those skilled in the art can clearly understand that the various embodiments can be implemented by means of software and a necessary general hardware platform, and of course, by hardware. Based on such understanding, the technical solutions of the present disclosure or a part of the technical solutions, which is essential or contributes to the prior art, may be embodied in the form of a software product, which is stored in a storage medium such as ROM/RAM, magnetic Discs, optical discs, etc., including several instructions to enable a computer device (which may be a personal computer, a server, a network device, and etc.) to perform the methods of the various embodiments or a part of the embodiments.

Finally, the methods of the present disclosure are only preferred embodiments and are not intended to limit the scope of the present disclosure. Any modification, equivalent substitution, improvement and etc. made within the spirit and scope of the present disclosure should be included within the scope of the present disclosure.

## Claims

1. A join query method of multiple time series in columnar storage, comprising:
step S1: dividing multiple time series in columnar storage into a plurality of projected time series and a plurality of selected time series, each of the time series comprising a timestamp column and a value column;
step S2: screening, from a timestamp column of each selected time series, timestamps that satisfy a preset filter condition of each selected time series; and
step S3: traversing the projected time series based on the timestamps that satisfy the preset filter condition of each selected time series, and acquiring join query results, wherein the join query results are timestamps of the projected time series and data values corresponding to the timestamps of the projected time series.

2. The method of claim 1, wherein step S2 comprises:
S21, acquiring a filter condition corresponding to each selected time series, the filter condition comprising a timestamp predicate and a data value predicate; and
S22, for each selected time series, storing timestamps that satisfy the timestamp predicate and whose corresponding data values simultaneously satisfy the data value predicate in the timestamp column of the selected time series.

3. The method of claim 2, wherein S22 specifically comprises:
simultaneously reading in batches timestamps in the timestamp column of each selected time series and the data values of the value column of each selected time series, the batch read being to read a preset number of timestamps and data values each time until all the timestamps in the timestamp column and all the data values of the value column are read; and
storing timestamps that satisfy the filter condition of each selected time series, respectively based on the read results.

4. The method of claim 1, wherein step S3 comprises:
S31, screening a first timestamp common to all the selected time series in the timestamps that satisfy the filter condition of each selected time series;
S32, traversing the projected time series, acquiring a second timestamp that is the same as the first timestamp in the timestamp columns of the projected time series; and
S33, using the second timestamp and a data value corresponding to the second timestamp as the join query results.

5. The method of claim 4, wherein step S31 comprises:
selecting one target timestamp from timestamps that satisfy the filter condition of each selected time series and storing the target timestamp in a preset storage queue; and
traversing timestamps that satisfy the filter condition of remaining selected time series based on the target timestamp corresponding to each selected time series, and using the target timestamp as the first timestamp when the target timestamp is included in all the timestamps that satisfy the filter condition of the remaining selected time series.

6. The method of claim 5, wherein step S31 further comprises:
traversing timestamps that satisfy the filter condition of the remaining selected time series based on the target timestamp corresponding to each selected time series, and deleting the target timestamp from the storage queue when the target timestamp is not included in all the timestamps that satisfy the filter condition of the remaining any selected time series.

7. The method of claim 5 or 6, wherein the storage queue is a priority queue.

8. A join query system of multiple time series in columnar storage, comprising:
a time series division module configured to divide multiple time series in columnar storage into a plurality of projected time series and a plurality of selected time series, each of the time series comprising a timestamp column and a value column;
a timestamp filtration module configured to screen, from a timestamp column of each selected time series, timestamps that satisfy a preset filter condition of each selected time series; and
a join query module configured to traverse the projected time series based on the timestamps that satisfy the preset filter condition of each selected time series, and acquire a join query results, wherein the join query results are timestamps of the projected time series and data values corresponding to the timestamps of the projected time series.

9. A computer program product, comprising: a computer program stored on a non-transitory computer readable storage medium, the computer program comprising program instructions enabling a computer to perform the method of any one of claims 1 to 7, when the program instructions are executed by the computer.

10. A non-transitory computer readable storage medium storing computer instructions that enable a computer to perform any of the methods of claims 1 to 7.
